# EUROPEAN PATENT SPECIFICATION

(11) **EP 1 689 120 B1**
(45) Date of publication and mention of the grant of the patent: **09.03.2011**
(21) Application number: 03818888.4
(22) Date of filing: 29.10.2003
(51) Int. Cl.: H04L 12/22, H04L 29/06

(54) **An authentication method for information storing application**
Authentifikationsverfahren für Informationsspeicheranwendungen
Procédé d'authentification en matière d'application de stockage d'informations

(43) Date of publication of application: 09.08.2006
(73) Proprietor: Lin, Hui, Taipei 114, Taiwan (CN)
(72) Inventor: Lin, Hui, Taipei 114, Taiwan (CN)
(74) Representative: Lang, Christian
(86) International application number: PCT/CN2003/000914
(87) International publication number: WO 2005/041482

(56) References cited:
- WO-A-02/50743
- WO-A2-02/35329
- CN-A- 1 405 686
- FR-A- 2 832 576
- JP-A- 2003 178 034
- FERREIRA R C: "THE SMART CARD: A HIGH SECURITY TOOL IN EDP" PHILIPS TELECOMMUNICATION REVIEW, PHILIPS TELECOMMUNICATIE INDUSTRIE N.V. HILVERSUM, NL, vol. 47, no. 3, 1 September 1989 (1989-09-01), pages 1-19, XP000072642

## Description

### BACKGROUND OF THE INVENTION

### 1. Field of the Invention

The present invention relates to an identification process of application of data storage and identification hardware with IC (Integrated Circuit) card, and particularly to an IC card identification process and hardware device of confirming a legal login user's authentication.

### 2. Description of the Related Art

Since MP3 (MPEG Audio Layer 3) technique is wide known and popular, and P2P (Peer to Peer) file sharing mode on Internet has been developed, users can easily search and share music or any other files all over the world. Right now the problems of question of tort of copyright or IP (Intellectual Property) are also appeared. Not only records companies but also IP owners try to create a mechanism of payment of authorized download.

Nowadays most mechanisms of authorization process use simple login system. System server or user himself gives a set of username and password, and uses it to login to access any particular service on Internet. Sometimes AP server (Application server) uses some coding encryption technique but this also cannot prevent the attack by crackers to make sure the safety of data. And for convenient reason, many services provide all over the Internet so that users can use them everywhere. But this also causes illegal using and difficult to trace if user leave the password on the public computer or divulge by back door computer program (virus).

In modern time, most crackers often use "Dictionary Attack" to crack legal users' password, so the simple security method by confirming a user's ID and password is not secure. This is because the following reasons.
1. Most passwords are only choice for easy to memorize, generally passwords are not random letter and numbers. A master of cryptography Daniel Klein believes that "Dictionary Attack" can easily crack more than 40% passwords. There are also many password crack software made by crackers or system professionals on the Internet as a tool for invasion.
2. The information system and network becomes more and more complicated; and many different systems are connected by networks. Thus when a user logs into different systems, due to requirement of each system, a user has to login many times with password(s). According to a statistics, only few users can memorize 3 different sets of 8 characters length passwords. The conclusion is that most users write down the password and store in a convenient place. Obviously, that also becomes a weak point of security.
3. Even without above two weaknesses, but still, a password transfer from the client to server in plain code. A cracker can easily intercepts the password everywhere on the Internet or Local Area Network (LAN), then can fake (Replay) to invade the target system. Even using a dedicated line still switch in a public switch system. For a cracker, that's easier to invade because information on the line is routed so that he can concentrate to intercept on the dedicated line.

On Internet, the communication protocol TCP/IP is used. Two computers on the network should make a Three-way Handing Shaking to set up a connection to transfer data, but this gives a chance to a hidden cracker due to following reasons.

Information transfer via public Internet is in plain code. Any computer connecting to the Internet can monitor (Sniffing) information that transfers on the network. Thus all the privates and commercial secrets will expose on Internet.

To fake user's identity to access remote server, a cracker will also fake as the server to reply mass useless information to user, attempt to tie up operation of client computer (Denial of Service; DoS). A cracker can not only fake a user's identity to access remote service, issue, change, or delete user's data with no aware. And the true user even could not deny that the change was done by himself.

Further, when user connects Internet on public computer, the connection is via LAN to Internet. On LAN, Ethernet-based IP network for example, data (Packet) is broadcasted to all PCs on LAN. Crackers can intercept data on LAN easily due to the following reasons:
1. Data (Packet) is broadcasted to all PCs on LAN in plain code, thus all PC connected on LAN can play a monitor role (Sniffer) to steal others' data.
2. The worse case is that once a password is cracked, system could be unauthorized signed into and changed data, spread fake messages, steal or delete information for commercial or noncommercial reasons... etc.

For above problems, the Internet security leak should be mend. One identity confirmation process should be set for double check except for only password. Methods and systems for authentication are known from FR 2832576 and WO 02/50743 A1.

### Summary of the Invention

The present invention is defined by the subject matter of the appended claims.

To solve the problems described above, the present invention discloses a method of installing identification hardware within an IC card and setting with a CA server (security mechanism) to satisfy below 5 requirements of information security of electronic data transferring on network:
1. Confidentiality:
   To make sure information may not be peeped or stolen by a third party to protect users' privacy. This can be done by encryption.
2. Integrity:
   To make sure information may not be tampered by a third party and can protect correctness of data. This can be done by digital signature or encryption.
3. Authentication:
   To make sure the source of transferring information may not be faked. This also can be done by digital signature or encryption.
4. Non-repudiation:
   With digital signature or encryption prevent a user's denying of access.
5. Access Control:
   For conforming users' authority according to identities.

As described above, an IC card device having an Integrated Circuit Card Identification (ICCID) and a Global Number (GLN) is used. With an IC card reader apparatus installed in a compatible Universal Serial Bus (USB), an interface hardware is as an identification device. When a user logins his username and password to access AP server with the IC card identification hardware device installed in the computer, a program installed within the IC card will make a login process to a CA server to decode the ICCID, compare with the CA identification database, produce an authorized (Validate=Y) EKI value, then decode the value to a KI value and calculate a random value. CA server will encrypt and store KI as the hardware identification successful verification (Server Result). This result can also record the accesses of a user, confirm legitimacy and limits of authority of ICCID of login. When hardware satisfy identification, CA server will send result random value to IC card, and once IC card receive this random value, within program will decode its ICCID to a KI, then encrypt KI and the random value from CA server to result verification (Client Result) for cross-comparing by AP server and CA server. If an IC card fails in cross comparing of authorization (Validate=N), user will be told by system that login failed.

AP server will receive ICCID, Client Result, username, and password when above process is success, then compares login username and password with its database and check avail date first. If correct, AP server will submit ICCID and Client Result to CA server to decrypt and compare with foregoing Server Result. If all matched, user can be confirmed as a legal registrant, and last Server Result will be cleared for next login. If not matched, CA sever will send back a failed message to AP server to reject access.

The downloaded files will be encrypted by program within IC card. Only with the decryption of original IC card can open or play the files. And as described above, crackers can only intercept a changed random value produced from CA server on the network. This value cannot be used as a valid login next time.

The User, AP server, and CA server in this identification system and method form a circle frame. No further process is required for users when login but only an added small program running in login page of AP server. The IC card is the only key that belongs to user as valid verification, with a compliant IC card reader work just simple like key and lock (flash memory with IC card and reader). ICCID was burned as firmware in the chip of IC card. IC card and reader can made compliant to USB interface hardware. This key can be used not only on Internet, but also on single computer as personal security lock. Any public computers, like in offices, schools, or shops, can use this apparatus to protect unauthorized access. For SYSOP (System Operator), this invention can be used to set classification of authorization, like payment mechanism.

### Brief Description of the Drawings

Fig. 1 is a diagram illustrating the operation procedure of the present invention;
Fig. 2 is a diagram showing the embodiment of login process of the present invention;
Fig. 3 is a diagram showing the embodiment of a download process according to the present invention;
Fig. 4 is a diagram illustrating the files opening process according to the present invention;
Fig. 5 is a diagram showing embodiment of files opening process according to the present invention;
Fig. 6 is a diagram showing embodiment of identification hardware device;
Figs. 7 and 8 shows the embodiment of application of MP3 player; and
Fig. 9 is a diagram illustration plugging into computer chassis according to the present invention.

### Detailed Description of the Preferred Embodiments

In the following description, refers to the drawings.

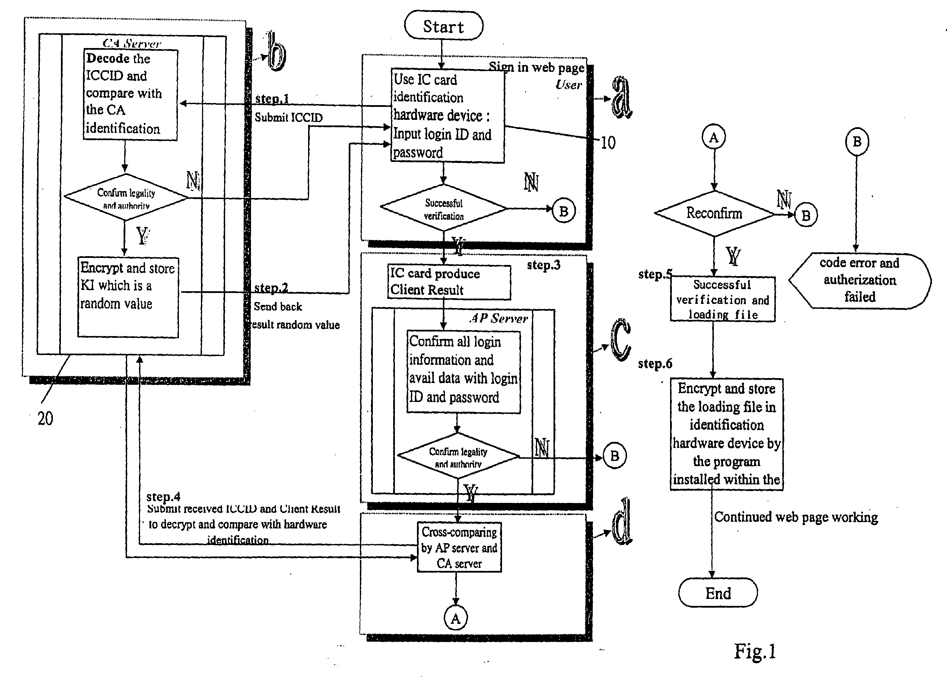

Fig. 1 illustrates procedures of the flow sheet of this invention, comprises a, b, c, d four main processes and six procedures from step 1 to step 6 of legal login process.

Process a: Using an IC card identification hardware device comprising an IC card and a IC card reader to login an AP server, and inputting a login ID and a password, then pressing a registration key.

Process b: IC card transferring login data and ICCID built in the IC card to a CA server by a built-in program in the IC card (step 1). The CA server will confirm legality and authority of ICCID. If it is confirmable, CA server will record in its database and generate a Server Result, and a random value is reported to the IC card (step 2).

Process c: When process b is confirmed, IC card will decode the ICCID with random value from CA server to generate a Client Result (step 3), transferring the ICCID, and Client Result and user's input data to an AP server. With these data, the AP server will confirm whether all login information and date are correct.

Process d: When process c is confirmed, the AP server will submit received ICCID and Client Result to CA server to decrypt again and compare with hardware identification (step 4).

For further description below, in process a, the user inserts an IC card, which includes ICCID and GLN codes into a card reader, which is installed in a flash memory of a USB interface as identification hardware device. Using this hardware device to open a login process of the AP server and then submit the login ID and password.

In process b, when user submits the ID and password, a built-in program in the IC card will transfer ICCID code to a CA server. The CA server will decode the ICCID, and then compare with the data in the CA identification database so as to produce an authorized (Validate=Y) EKI value, then decode the value into a KI value and generates a random value. The KI is encrypted and then stored as a hardware identification successful verification (Server Result). This result can also record the accesses of a user, confirm the legitimacy and limits of authority of login AP server of the ICCID. When the hardware satisfies the identification requirement, the CA server will send a random value to the IC card as a key value. If an IC card fails in comparison of the authorization (Validate=N), the system will inform the user end that the login process is failed.

If pass process b, then go to process c. AP server will receive key value and ICCID code of IC card, and submitted login information, then confirm the information and avail date.

In process d, if the process c is confirmed, the AP server will send the received key and the ICCID code to the CA server for further confirmation. The CA server will firstly decode the ICCID, and compare with the data in a database thereof. If this ICCID has a relative valid EKI, the key value is used to decode EKI and then the result is used to compare with Server Result. If matched, the user can login AP server and the CA server will clean out the Server Result therein for next use. If not matched, the CA server will inform the AP server that the ICCID code is error and the authorization is failed.

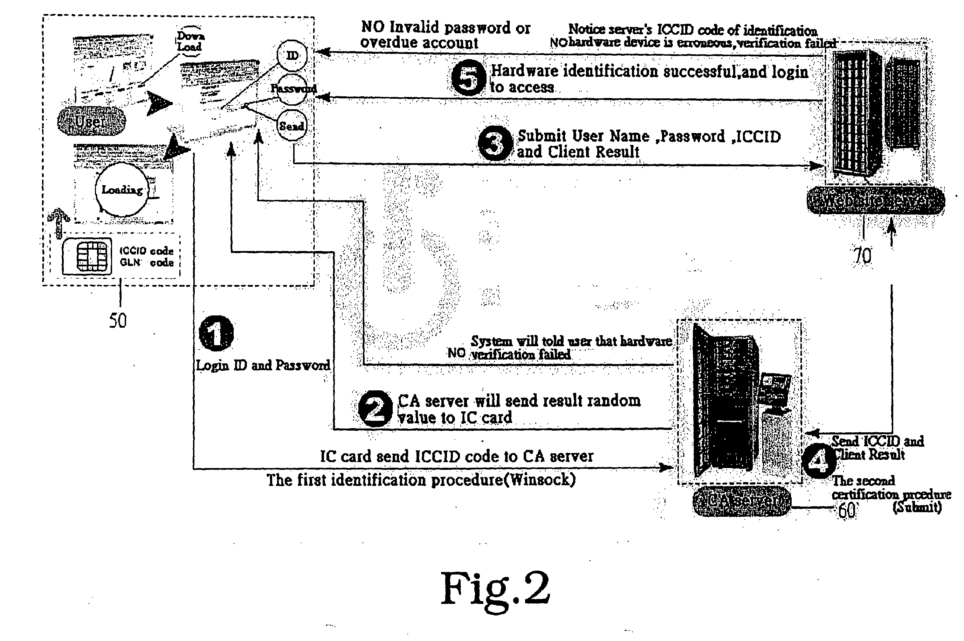

Fig. 2 is a schematic view about the hardware structure of the present invention. The actual login operation procedure, from submitting to authorization, contains totally 5 routes. Route 1 indicates that a user uses identification hardware (with IC card) 50 installed in the client computer to login AP server 70.

The user input a login ID and a password in login window (can be a web page). In that a program built in the IC card will guide the login procedure to the CA server 60. This is the first identification procedure (Winsock) of the prevent invention. In this process the CA server 60 will compare ICCID code and generate a Server Result. When hardware identification is confirmed, a route 2 is performed. In route 2, when the IC card receive a random value produced by a CA server 60, it will generate and encrypt to a Client Result. This Client Result will be used to compare with the AP server in second certification procedure.

If the first certification procedure successes, the process enter into a route 3. The AP server 70 will receive ICCID code, Client Result, username and password inputted by the login user. If the submitted data is correct, in a route 4 preceding the second certification procedure, an ICCID code and Client Result is sent back to the CA server 60 to confirm with Server Result. If it passes through the identification, in route 5, the CA server 60 will inform that he AP server certification is confirmed. After double check to make sure the user is a legal use, the AP server 70 can login to access, and the CA server 60 will clean up Server Result. If failed in route 4, the AP server 70 will receive a message of ICCID error from CA server 60 and deny to access.

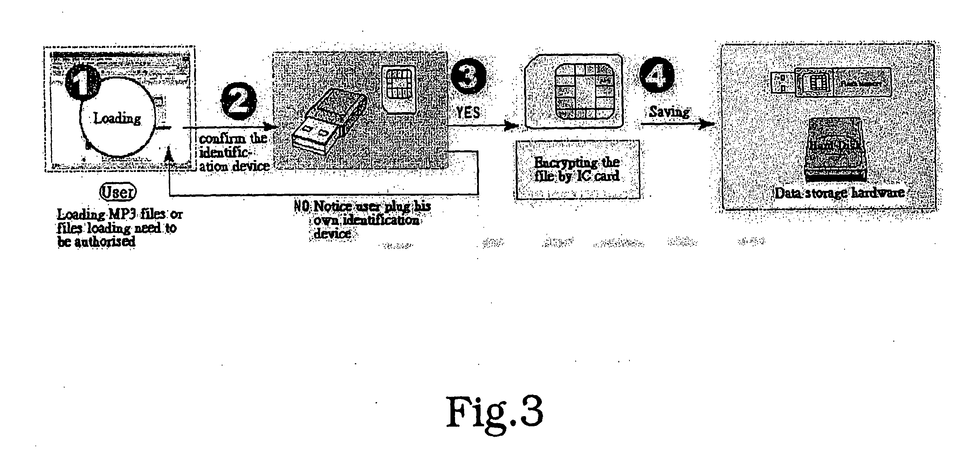

Fig. 3 is a diagram showing the embodiment of download process. There are 4 routes in this figure, and the route 2 is the identification mechanism (as shown in fig. 2).

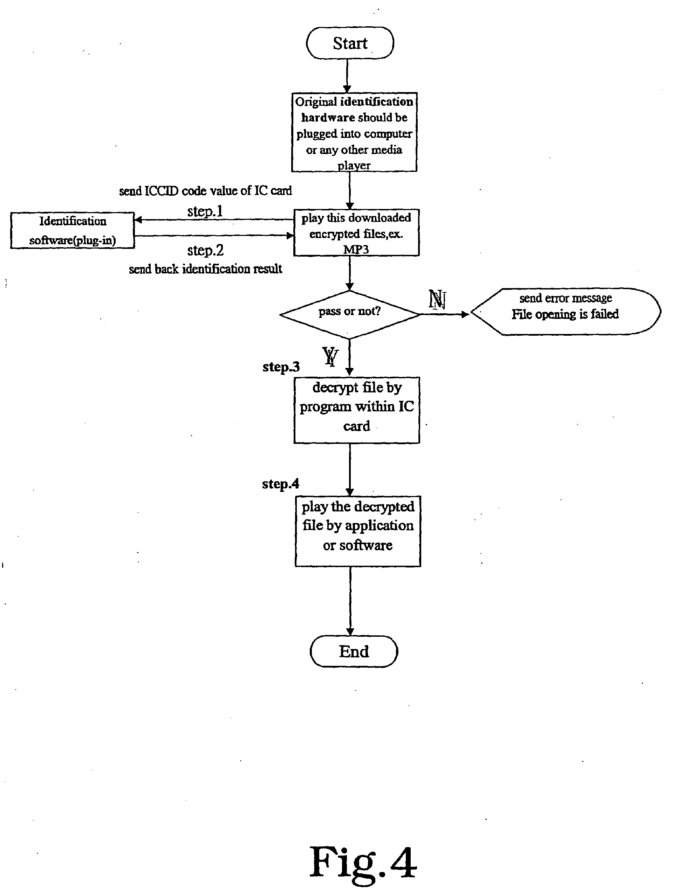

Fig. 4 is a diagram illustrated a file opening process of the present invention. As user opens a downloaded and encrypted file, an original identification hardware should be plugged into a computer or any other media player. When playing this downloaded encrypted MP3 file, for example, a program built in the IC card will send an ICCID to a plug-in identification software or the ICCID is decoded and identified by an application of MP3 player which has identification program itself. Then an identification result will send back to the application or software of the MP3 player. If identification passes, the file will be decrypted by a program within IC card and play by application or software; if failed, the IC card will send error message.

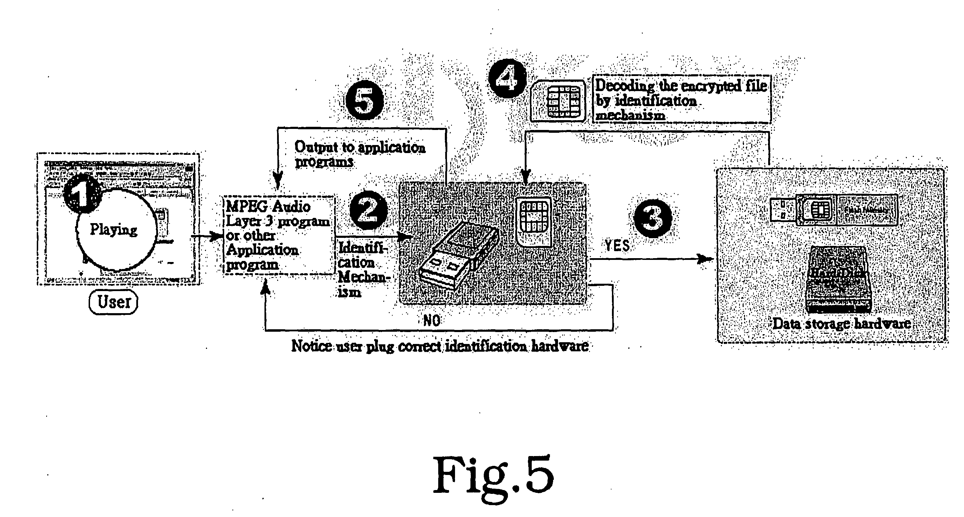

Fig. 5 is a diagram showing embodiment of files opening process. A user opens or plays file by plugging his own identification hardware to a computer or any other media player which has a USB interface, then running the software to work through 5 the routes. In that, the toute 2 is the identification process described above.

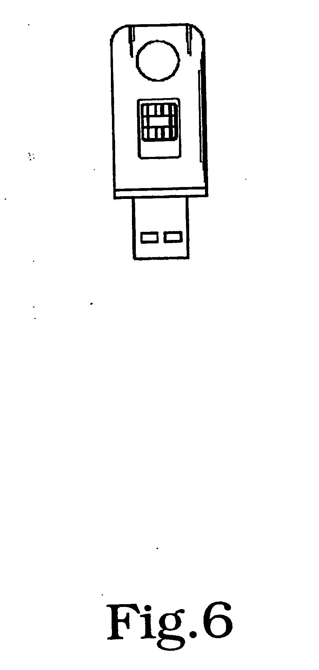

Fig. 6 is a diagram showing embodiment of identification hardware device.
The IC card device and flash memory are integrated. Using USB interface device can easily access and work as identification hardware.

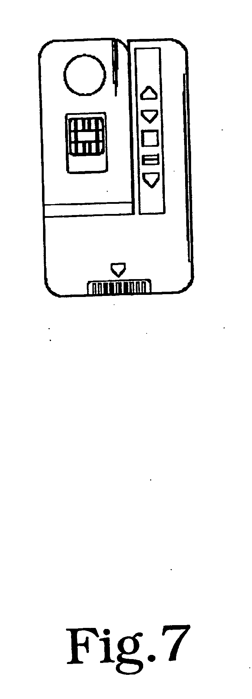

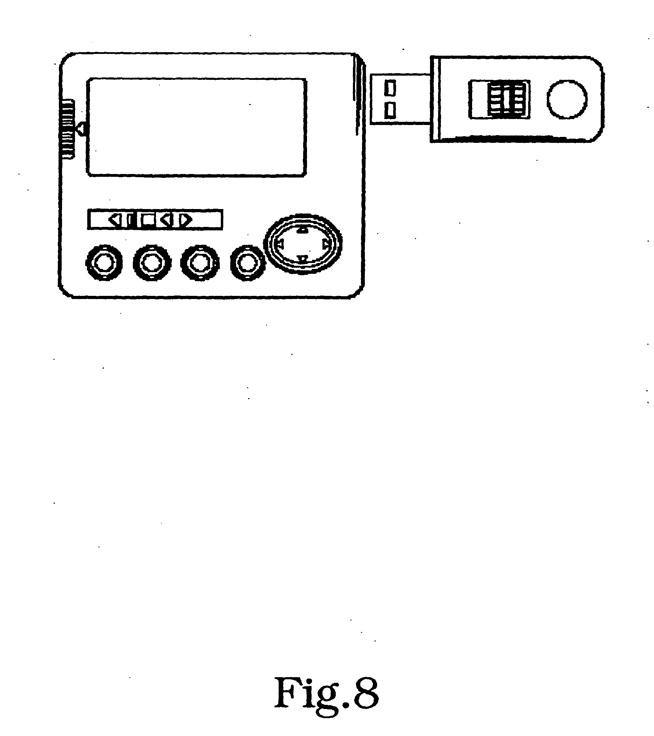

Fig. 7 & 8 ares a diagram showing the embodiment about the application of an MP3 player. It can work as above mentioned descriptions.

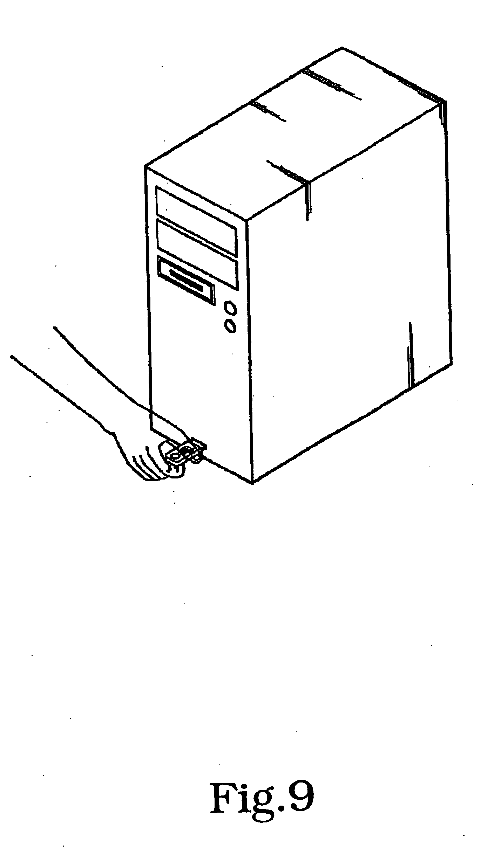

Fig. 9 is a diagram illustration plugging into computer chassis of the present invention. It can work as above mentioned descriptions.

The present invention can provide highly standard class security of many AP server services through Internet by encryptions and cross-confirmation double check system. The IC card identification hardware device can use as a private verification key to access not only on Internet but also many information systems of computer. The foregoing description of the preferred embodiment of the invention is for the purposes of illustration and description. It is not intended to exhaustive or to limit the invention to the precise from disclosed. Many other possible modifications and variations can be made without departing from the scope of the present invention, as defined in the following claims.

## Claims

1. An identification method for a data storage application using an integrated circuit IC card recorded with an integrated circuit card identification ICCID and a global number GLN, and an integrated circuit IC card reader apparatus installed in a computer or any other compatible device as identification hardware device, the IC card being inserted into the IC card reader apparatus; the method comprising the steps of:
A: using an IC card identification hardware device having the IC card and the reader apparatus to login into an application AP server, inputting a login identification ID and a password as login data;
B: the login data and ICCID being transferred to a CA server by using a program built in the IC card; the CA server decoding the ICCID and comparing the decoded ICCID with data in a database in the CA server for confirming the legality and authority of ICCID, if it is confirmed to be an legal and authored ICCID, the CA server recording the login times of the user in the database and generating a Server Result and a random value generated in the decoding process, the random value being then transferred to the IC card;
C: when in the process B is confirmed that the ICCID is a legal and authorized ICCID, IC card will decode the ICCID therein with the random value from the CA server, and the decoding result is used as a Client Result, then the ICCID, Client Result and user's login data being transferred to an AP server; by these data, the AP server will confirm whether all login information are allowable and check an allowed using period of the user;
D: if process C is confirmed that all the login information is allowable, the AP server will submit received ICCID and Client Result to the CA server to decrypt and compare with the Server Result.

2. The identification method of claim 1, wherein the IC card is USB-compliant interface apparatus.

3. The identification method of claim 1, wherein the IC card is a flash memory.

## Patentansprüche

1. Identifizierungsverfahren für eine Datenspeicheranwendung, welches eine Karte mit integriertem Schaltkreis IC verwendet, auf der eine integrierte Schaltkreiskartenidentifizierung ICCID und eine globale Nummer GLN abgespeichert sind, und eine integrierte Schaltkreis IC-Kartenleseapparatur, die in einem Computer oder jeder anderen kompatiblen Vorrichtung als Identifizierungshardwarevorrichtung installiert ist, wobei die IC-Karte in die IC-Kartenleseapparatur eingesteckt wird und wobei das Verfahren die Schritte umfasst:
A: Verwendung einer IC-Kartenidentifizierungshardwarevorrichtung, die die IC-Karte und die Leseapparatur aufweist, um in einen Anwendungs-AP-Server eingeloggt zu werden, wobei eine Log-in-Identifizierungs-ID und ein Passwort als Log-in Daten eingegeben werden;
B: die Log-in Daten und die ICCID werden zu einem CA-Server unter Verwendung eines Programms, welches in der IC-Karte abgebildet ist, transferiert; der CA-Servier dekodiert die ICCID und vergleicht die dekodierte ICCID mit Daten in einer Datenbank in dem CA-Server zur Bestätigung der Legalität und Berechtigung der ICCID, falls bestätigt wird, dass es eine legale und berechtigte ICCID ist, wobei der CA-Server die Log-in Zeiten des Benutzers in der Datenbank speichert und ein Serverergebnis erzeugt und wobei ein Zufallswert, der während des Dekodierverfahrens erzeugt wird, dann zu der IC-Karte transferiert wird;
C: wenn in dem Verfahren B bestätigt wird, dass die ICCID eine legale und autorisierte ICCID ist, wird die IC-Karte die ICCID darin mit dem Zufallswert von dem CA-Server dekodieren und das Dekodierergebnis wird als ein Client-Ergebnis verwendet, und dann werden die ICCID, das Client-Ergebnis und die Log-in Daten des Benutzers zu einem AP-Server transferiert, wobei durch diese Daten der AP-Server bestätigen wird, ob die gesamte Log-in Information zulässig ist, und prüfen wird, ob eine zulässige Benutzungszeit des Users gegeben ist;
D: falls der Verfahrensschritt C bestätigt, dass alle Log-in Informationen zulässig sind, wird der AP-Server die erhaltene ICCID und das Client-Ergebnis an den CA-Server schicken, um es zu entschlüsseln und mit dem Serverergebnis zu vergleichen.

2. Identifizierungsverfahren nach Anspruch 1, bei welchem die IC-Karte eine USB konforme Schnittstellenapparatur ist.

3. Identifizierungsverfahren nach Anspruch 1, bei welchem die IC-Karte ein Flashspeicher ist.

## Revendications

1. Procédé d'identification pour une application de mise en mémoire de données qui utilise une carte de circuit intégré IC, dans laquelle une identification de carte de circuit intégré ICCID et un nombre global GLN sont enregistrés, et un appareil lecteur de carte de circuit intégré IC installé dans un ordinateur ou dans n'importe quel dispositif compatible comme dispositif matériel d'identification, la carte IC étant insérée dans l'appareil lecteur de carte de circuit intégré IC, le procédé comprenant les étapes :
A : d'utilisation d'un dispositif matériel d'identification de carte IC ayant la carte IC et l'appareil lecteur pour se connecter à un serveur d'application AP, d'entrée d'un identifiant de connexion ID et d'un mot de passe comme données de connexion ;
B : les données de connexion et l'ICCID étant transférées à un serveur CA en utilisant un programme construit dans la carte IC, le serveur CA décodant l'ICCID et comparant l'ICCID décodée avec des données dans une base de données dans le serveur CA pour confirmer la légalité et l'autorité de l'ICCID ; si elle est confirmée comme étant une ICCID légale et ayant autorité, le serveur CA enregistre les heures de connexion de l'utilisateur dans la base de données et génère un résultat serveur et une valeur aléatoire générée dans le processus de décodage, la valeur aléatoire étant ensuite transférée à la carte IC ;
C : s'il est confirmé, dans le processus B, que l'ICCID est une ICCID légale et identifiée, la carte IC y décodera l'ICCID avec la valeur aléatoire du serveur CA et le résultat de décodage est utilisé comme un résultat client, ensuite l'ICCID, le résultat client et les données de connexion de l'utilisateur seront transférées à un serveur AP ; par ces données, le serveur AP confirmera si toutes les informations de connexion sont admissibles et vérifiera une période d'utilisation permise de l'utilisateur ;
D : s'il est confirmé, dans le processus C, que toutes les données de connexion sont admissibles, le serveur AP soumettra l'ICCID reçue et le résultat client au serveur CA pour décrypter et comparer avec le résultat serveur.

2. Procédé d'identification selon la revendication 1 dans lequel la carte IC est un appareil d'interface compatible USB.

3. Procédé d'identification selon la revendication 1 dans lequel la carte IC est une mémoire flash.
